Europäisches Patentamt

European Patent Office

Office européen des brevets

(11) Numéro de publication: **0 192 007 B1**

# FASCICULE DE BREVET EUROPEEN

(45) Date de publication de fascicule du brevet:
**06.03.91**

(51) Int. Cl.5: **A23G 3/30**

(21) Numéro de dépôt: **85402586.3**

(22) Date de dépôt: **20.12.85**

Le dossier contient des informations techniques présentées postérieurement au dépôt de la demande et ne figurant pas dans le présent fascicule.

(54) **Chewing-gum sans sucre moucheté et son procédé de fabrication.**

(30) Priorité: **21.12.84 FR 8419740**

(43) Date de publication de la demande:
**27.08.86 Bulletin 86/35**

(45) Mention de la délivrance du brevet:
**06.03.91 Bulletin 91/10**

(84) Etats contractants désignés:
**BE CH DE FR GB IT LI NL SE**

(56) Documents cités:
WO-A-84/03201
FR-A- 2 197 568
FR-A- 2 486 364
GB-A- 2 053 651
US-A- 2 444 080
US-A- 3 930 026
US-A- 4 208 431
US-A- 4 353 927
US-A- 4 556 565
FR-A- 1 228 510
FR-A- 2 445 839
FR-A- 2 502 495
US-A- 2 190 180
US-A- 3 205 075
US-A- 3 962 463
US-A- 4 248 895
US-A- 4 514 423

(73) Titulaire: **Roquette Frères**

**F-62136 Lestrem(FR)**

(72) Inventeur: **Serpelloni, Michel**
**270 Boulevard Voltaire**
**F-62400 Bethune(FR)**

(74) Mandataire: **Koch, Gustave et al**
**Cabinet PLASSERAUD 84, rue d'Amsterdam**
**F-75009 Paris(FR)**

## Description

L'invention a pour objet un chewing-gum sans sucre moucheté.

Ce chewing-gum rencontre de l'intérêt auprès du consommateur en raison de son aspect visuel original.

Elle vise également un procédé propre à sa fabrication.

Les chewing-gums du genre en question comportent une phase liquide aqueuse.

Ils comprennent :

- environ 10 à 40 % d'une gomme base constituée par exemple d'un mélange de gomme naturelle, de résines synthétiques et de cires,
- environ 9 à 80 % d'un édulcorant liquide constitué par un sirop à base de sucres hydrogénés, par exemple par un sirop de sorbitol,
- environ 0 à 75 % et, plus particulièrement, environ 2 à 75 % d'un édulcorant solide constitué par exemple par un polyol cristallisé dont notamment le sorbitol ou le mannitol,

divers agents aromatiques, divers agents de conservation et divers agents modifiant la texture de la gomme base, comme la glycérine ou la lécithine.

L'aspect moucheté est généralement obtenu à l'aide de particules d'édulcorant solide coloré et éventuellement aromatisé.

La proportion en poids représentée par les particules colorées par rapport à la masse totale du chewing-gum est de l'ordre de 0,5 à 3 %, notamment de 1 %.

Dans la pratique, les particules colorées sont constituées essentiellement de sorbitol coloré dans la masse.

Elles peuvent être aromatisées à l'aide d'arômes conventionnels ; on pourra utiliser à cet égard des arômes synthétiques ou tous arômes obtenus à partir de certaines plantes ; on peut citer les huiles de menthe, de cannelle, etc.

Les particules en question peuvent, de plus, être édulcorées, notamment à l'aide d'édulcorants artificiels tels que la saccharine, l'aspartame et autres.

Leur granulométrie est généralement de 500 à 1500μm et plus particulièrement de 800 à 1200 μm.

Les susdits chewing-gums sont généralement préparés de la manière suivante :

- on assouplit la gomme base dans un pétrin par chauffage et par malaxage,
- on introduit successivement dans la gomme base assouplie, et tout en maintenant les susdits chauffage et malaxage, l'édulcorant en phase liquide, l'édulcorant en phase solide puis, ou le cas échéant en même temps, les particules d'édulcorant solide coloré et éventuellement aromatisé,
- on soumet la composition ainsi préparée par exemple à une extrusion à travers une filière, puis à un laminage et à un découpage pour lui donner sa forme commerciale, par exemple rectangulaire.

Au moment même de sa fabrication, le chewing-gum ainsi obtenu présente à sa surface des mouchetures constituées par les particules d'édulcorant coloré et éventuellement aromatisé, ces particules étant plus ou moins enfoncées dans la gomme base et plus ou moins écrasées lors de l'étape finale de laminage.

Or,

- lorsque les particules d'édulcorant ont été colorées dans la masse par un colorant soluble dans l'eau, ce colorant diffuse très vite et intégralement dans la masse du chewing-gum,
- et même en remplaçant ce type de colorant par un colorant insoluble dans l'eau, ou laque, le phénomène de diffusion, bien que ralenti, existe toujours, notamment avec les colorants rouges au point de devenir discernable au bout d'environ 10 jours et au point qu'au bout d'environ 30 jours le colorant initialement concentré dans la masse de chaque particule se trouve complètement dilué dans toute la masse du chewing-gum, de telle sorte qu'on ne peut plus retrouver de manière visuelle l'emplacement des particules colorées initiales, seules subsistant des taches plus ou moins floues et indéfinies.

Pour remédier à cet inconvénient, il a déjà été envisagé d'avoir recours à une encapsulation des particules d'édulcorant coloré à l'aide de produits enrobants insolubles dans l'eau, notamment du type shellac à usage alimentaire.

Les particules ainsi traitées donnent satisfaction sur le plan du confinement du colorant mais présentent l'inconvénient de confiner par ailleurs totalement et sans guère de possibilité de libération, les arômes et/ou les édulcorants artificiels qui peuvent entrer dans la constitution de la particule colorée et dont l'entier effet est alors perdu.

De plus, c'est une solution à prix de revient élevé --car nécessitant une ligne de traitement séparée des particules d'édulcorant coloré--, incompatible avec la fabrication d'un chewing-gum moucheté compétitif.

Or, la Société Demanderesse a réussi, à l'issue de recherches approfondies, à mettre au point un chewing-gum sans sucre moucheté comprenant, distribuées dans sa masse constitutive, une pluralité de particules d'édulcorant coloré éventuellement aromatisé et éventuellement édulcoré à l'aide d'édulcorants artificiels et ne présentant plus ces inconvénients de l'art antérieur, ce chewing-gum étant caractérisé par le fait qu'il comporte au moins un des agents de confinement du groupe constitué par les sels d'acides gras alimentaires tels que les stéarates et notamment le stéarate de magnésium qui sont incorporés aux particules en une proportion d'environ 0,5 à 4 % en poids par rapport au poids total de ces particules, par les émulsifiants alimentaires classiques tels que les esters d'acides gras et notamment l'ester de glycérol, qui sont incorporés aux particules en une proportion d'environ 0,5 à 5 % en poids par rapport au poids total de ces particules et par les hydrolysats d'amidon hydrogénés dont le spectre glucidique est le suivant, les pourcentages étant donnés par rapport à la matière sèche : - maltitol : de 25 à 95 % et, de préférence, de 25 à 85 %, - sorbitol : de 0,1 à 19 % et, de préférence, de 1 à 17 %, le complément à 100 étant constitué par des polyols de degré de polymérisation $\geq$ 3, ces hydrolysats étant incorporés à la phase liquide du chewing-gum en une proportion d'environ 5 à 30 % en poids par rapport à la masse totale du chewing-gum.

En ce qui concerne tout d'abord les susdits sels d'acides gras alimentaires et les susdits émulsifiants alimentaires classiques, on les fait comporter, comme indiqué ci-dessus, par les particules d'édulcorant coloré.

De façon surprenante, l'efficacité de ces produits, qui sont des agents hydrophobants, se manifeste, dans les formules employées, à des concentrations très faibles. Les qualités organoleptiques des chewing-gums obtenus ne sont donc pas altérées.

Une proportion d'environ 1 % de stéarate de magnésium ou d'émulsifiant alimentaire dans les particules d'édulcorant coloré permet de confiner le colorant pendant une durée pouvant atteindre environ 3 mois ; au-delà de 4% le goût du produit hydrophobant peut devenir gênant.

Pour ce qui est ensuite des susdits hydrolysats d'amidon hydrogénés, qui peuvent également être désignés par l'expression sirops de glucose hydrogénés, on les fait comporter à la phase liquide du chewing-gum. Ces produits permettent de prolonger dans des proportions décisives le confinement du colorant dans la particule d'édulcorant coloré dès lors que cet édulcorant est essentiellement constitué par du sorbitol, ce confinement pouvant être considéré comme définitif compte tenu des durées et des conditions de stockage extrêmes rencontrées dans l'industrie et le commerce du chewing-gum.

Le brevet FR-A-2 486 384 concerne des hydrolysats d'amidon hydrogénés mis en oeuvre sous la forme d'une couche dure et homogène ne pouvant donner lieu à aucun phénomène de migration de particules puisque celles-ci seraient emprisonnées dans un réseau solide. Au contraire, dans le cadre de la présente invention, les hydrolysats d'amidon hydrogénés font partie de la phase liquide du chewing-gum.

Le brevet FR-A-2 486 384 recommande d'ailleurs indifféremment l'emploi de sorbitol ou de maltitol qui sont donc considérés comme équivalents (page 3, lignes 10 à 20) et donne même une préférence au sorbitol (page 3, lignes 15-16) alors que ce produit est inopérant dans le cadre de la présente invention s'il est utilisé seul dans la phase liquide du chewing-gum.

Ce résultat est d'autant plus surprenant et inattendu que l'hydrolysat d'amidon hydrogéné mis en oeuvre contient, tout comme le sirop de sorbitol liquide qui constitue classiquement la phase liquide du chewing-gum, une quantité d'eau importante.

De préférence, on utilise un hydrolysat d'amidon hydrogéné présentant la composition suivante :

|              |                 |
| ------------ | --------------- |
| - maltitol      | de 35 à 75 %    |
| - sorbitol      | de 5 à 17 %     |
| - maltotriitol  | de 10 à 25 %,   |

le complément à 100 étant constitué par les polyols de degré de polymérisation ou DP $\geq$ 4.

Un hydrolysat d'amidon hydrogéné donnant des résultats particulièrement avantageux est celui commercialisé sous la dénomination LYCASIN 80/55® qui est à 70 % de matières sèches et qui présente la composition suivante :

EP 0 192 007 B1

| | |
|---|---|
| - disaccharides hydrogénés | de 50 à 55 % |
| - sorbitol | de 6 à 8 % |
| - tri- à hexasaccharides hydrogénés | de 20 à 25 % |
| - saccharides hydrogénés de DP > 6 | de 15 à 20 %. |

Suivant un mode de réalisation avantageux, le chewing-gum conforme à l'invention comprend :
- comme constituant, une proportion par rapport à la masse totale du chewing-gum d'environ 5 à environ 30 % en poids du susdit hydrolysat d'amidon hydrogéné,
- une pluralité de particules d'édulcorant coloré, éventuellement aromatisé et comprenant éventuellement un édulcorant artificiel, ces particules étant distribuées au sein de sa masse constitutive et comportant environ 0,5 à environ 4% de sels d'acides gras alimentaires tels que les stéarates et notamment le stéarate de magnésium, ou d'environ 0,5 à 5 % d'émulsifiants alimentaires classiques tels que les esters d'acides gras et notamment l'ester de glycérol.

Le procédé conforme à l'invention pour la fabrication du chewing-gum selon l'invention est caractérisé par le fait :
- qu'au moment de la fabrication des particules d'édulcorant coloré et éventuellement aromatisé, on fait comporter à ces particules une proportion faible d'environ 0,5 à environ 4 % d'agent hydrophobant du type sels d'acides gras alimentaires, tels que les stéarates notamment de magnésium, ou une proportion faible d'environ 0,5 à 5 % d'agent hydrophobant du type émulsifiant alimentaire classique tel que les esters d'acides gras, notamment l'ester de glycérol, et/ou par le fait
- que l'on fait comprendre à la phase liquide, ajoutée au moment du malaxage à l'intérieur du pétrin, une proportion d'environ 5 à 30 % par rapport à la masse totale du chewing-gum d'un hydrolysat d'amidon hydrogéné tel que défini plus haut.

L'invention pourra être encore mieux comprise à l'aide des exemples qui suivent et qui soit servent à fournir des éléments de comparaison, soit sont relatifs à des modes de réalisation avantages de l'invention.

## EXEMPLES

En suivant le procédé de fabrication indiqué en début de description, on a préparé différents chewing-gums comportant des particules colorées.

Les compositions exactes des chewing-gums finis ainsi que les mesures de la diffusion du colorant entrant dans la constitution des particules colorées, après stockage dans le milieu ambiant, sont réunis dans le tableau I.

Dans ce tableau :
- le chewing-gum désigné par "Ch 1" correspond au chewing-gum de référence dans lequel l'édulcorant de la phase solide est constitué d'un mélange de sorbitol poudre, à savoir celui commercialisé sous la marque NEOSORB® P 60 par la Société Demanderesse, de saccharine et de mannitol à l'état de poudre ; l'édulcorant de la phase liquide est constitué par un sirop de sorbitol à 70 % de matières sèches, à savoir celui commercialisé sous la marque NEOSORB® 70/70 M par la Société Demanderesse ; les particules colorées sont constituées de granules de sorbitol d'une granulométrie comprise entre 800 et 1200 μm et d'une granulométrie moyenne de 1000 μm ; elles sont préalablement colorées dans la masse avec une laque insoluble, par exemple du type ALLURO RED COLOR INDEX CI 16035 ou du type FAST GREEN FCF COLOR INDEX 42053 ; ce chewing-gum comprend en outre divers additifs ou agents de texture comme la glycérine, et comme l'arôme de menthe LAUTAROME 29970 (commercialisé par la Société LAUTIER, Grasse, France) ;
- le chewing-gum désigné par "Ch 2" correspond à un chewing-gum identique à Ch 1 à la différence près que les particules colorées sont composées de grains de sorbitol coloré dans lesquels on a introduit de manière homogène 1% (par rapport à la masse de sorbitol coloré) de stéarate de magnésium, le pourcentage en poids de stéarate de magnésium étant donné par rapport à la masse de sorbitol coloré et aromatisé ;
- le chewing-gum désigné par "Ch 3", donné à titre comparatif (art antérieur), correspond à un chewing-gum identique à Ch 1 à la différence près que les particules colorées et aromatisées sont composées de grains de sorbitol coloré dans la masse préalablement enrobés dans une drageuse avec une laque insoluble du type shellac commercialisée par la Société CARL ROTH KG CHEMISCHE FABRIKEN, la proportion de shellac étant de 2 % en poids par rapport à la masse de sorbitol

4

coloré et aromatisé ;

- le chewing-gum désigné par "Ch 4" correspond à un chewing-gum identique à Ch 1 à la différence près que la phase liquide est constituée de 50 % d'un premier sirop de maltitol à 70 % de matières sèches désigné par "sirop de maltitol n° 1" et comprenant sur matières sèches 90,5 % de maltitol, 2,3 % de sorbitol, 6,2 % de maltotriitol et O,4% de produits de degré de polymérisation ≧ 4 et de 50 % d'un sirop de glucose hydrogéné de marque LYCASIN® 80/55 ;
- le chewing-gum désigné par "Ch 5" correspond à un chewing-gum identique à Ch 1 à la différence près que la phase liquide est constituée uniquement du sirop hydrogéné LYCASIN® 80/55,
- le chewing-gum désigné par "Ch 6" correspond à un chewing-gum identique à Ch 1 à la différence près que la phase liquide est constituée pour 42,5 % d'un deuxième sirop de maltitol à 70 de matières sèches désigné par "sirop de maltitol n° 2" et comprenant sur matières sèches 73,1 % en poids de maltitol, 3,2 % de sorbitol, 14,8 % de maltotriitol et 8 % de produits de DP ≥ 4 et pour 57,5 % du sirop de sorbitol NEOSORB® 70/70 M.

**TABLEAU I**

| COMPOSITION | Ch 1 | Ch 2 | Ch 3 | Ch 4 | Ch 5 | Ch 6 |
|---|---|---|---|---|---|---|
| Gomme base | 30,0 % | 30,0 % | 30,0 % | 30,0 % | 30,0 % | 30,0 % |
| Edulcorant solide (sous forme de poudre) : | | | | | | |
| - sorbitol de marque NEOSORB® P 60 | 42,52 % | 42,52 % | 42,52 % | 42,52 % | 42,52 % | 42,52 % |
| - Mannitol | 4,0 % | 4,0 % | 4,0 % | 4,0 % | 4,0 % | 4,0 % |
| - Particules colorées constituées de sorbitol poudre coloré et aromatisé | 1 % | 1 % | 1 % | 1 % | 1 % | 1 % |
| Edulcorant liquide : | | | | | | |
| - LYCASIN® 80/55 | 0 | 0 | 0 | 8,25 % | 16,50 % | 0 |
| - NEOSORB® 70/70 M | 16,50 % | 16,50 % | 16,50 % | 0 | 0 | 9,50 % |
| - Sirop de maltitol n° 1 | 0 | 0 | 0 | 8,25 % | 0 | 0 |
| - Sirop de maltitol n° 2 | 0 | 0 | 0 | 0 | 0 | 7 % |
| Additif : | | | | | | |
| - Glycérine | 5,0 % | 5,0 % | 5,0 % | 5,0 % | 5,0 % | 5,0 % |
| Stéarate de magnésium (% par rapport à la masse totale) | 0 | 0,01 % | 0,02 % | 0 | 0 | 0 |
| Laque d'enrobage du type shellac (% par rapport à la masse totale) | 0 | 0 | 0 | 0 | 0 | 0 |
| Arôme | q.s.p. 100 % | q.s.p. 100 % | q.s.p. 100 % | q.s.p. 100 % | q.s.p. 100 % | q.s.p. 100 % |
| Diffusion après 10 jours | commençante | inexistante | inexistante | inexistante | inexistante | inexistante |
| Diffusion après 90 jours | totale | très faible | inexistante | non visible | non visible | très faible |
| Diffusion commençante à | 10 jours | 90 jours | inexistante à 200 jours | non visible à 200 jours | non visible à 200 jours | 90 jours |

Des résultats réunis dans le tableau I, on déduit que les chewing-gums conformes à l'invention (Ch 2 et Ch 4 à Ch 6) ne présentent pas de diffusion pendant des durées habituelles de stockage qui sont généralement inférieures à 3 mois et que leur arôme est ressenti pleinement, contrairement à celui du chewing-gum Ch 3.

Comme il va de soi et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes.

## Revendications

1. Chewing-gum sans sucre moucheté comportant, distribuées dans la masse, une pluralité de particules d'édulcorant coloré, éventuellement aromatisé et comportant éventuellement un édulcorant artificiel, caractérisé par le fait qu'il comporte au moins un des agents de confinement du groupe constitué par les sels d'acides gras alimentaires tels que les stéarates et notamment le stéarate de magnésium qui sont incorporés aux particules en une proportion d'environ 0,5 à 4 % en poids par rapport au poids de ces particules, par les émulsifiants alimentaires classiques tels que les esters d'acides gras et notamment l'ester de glycérol, qui sont incorporés aux particules en une proportion d'environ 0,5 à 5 % en poids par rapport au poids de ces particules et par les hydrolysats d'amidon hydrogénés dont le spectre glucidique est le suivant, les pourcentages étant donnés par rapport à la matière sèche :
   - maltitol : de 25 à 95 % et, de préférence, de 25 à 85 %,
   - sorbitol : de 0,1 à 19 % et, de préférence, de 1 à 17 %, le complément à 100 étant constitué par des polyols de degré de polymérisation $\geq$ 3, ces hydrolysats étant incorporés à la phase liquide du chewing-gum en une proportion d'environ 5 à 30 % en poids par rapport à la masse totale du chewing- gum.

2. Chewing-gum sans sucre moucheté selon la revendication 1, caractérisé par le fait que l'hydrolysat d'amidon hydrogéné utilisé présente la composition suivante :

   - maltitol        de 35 à 75 %
   - sorbitol        de 5 à 17 %
   - maltotriitol    de 10 à 25 %,

   le complément à 100 étant constitué par les polyols de degré de polymérisation ou $DP' \geq 4$.

3. Chewing-gum sans sucre moucheté selon la revendication 1, caractérisé par le fait que l'hydrolysat d'amidon hydrogéné utilisé présente la composition suivante :
   - disaccharides hydrogénés de 50 à 55 %

   - sorbitol                               de 6 à 8 %
   - tri- à hexasaccharides hydrogénés      de 20 à 25 %
   - saccharides hydrogénés de DP > 6       de 15 à 20 %.

4. Procédé pour la préparation d'un chewing-gum sans sucre moucheté selon la revendication 1, caractérisé par le fait:
   - qu'au moment de la fabrication des particules d'édulcorant coloré, éventuellement aromatisé et comprenant éventuellement un édulcorant artificiel, on fait comporter à ces particules une proportion d'environ 0,5 à 4% d'agent hydrophobant du type sel d'acide gras, tel que les stéarates notamment de magnésium, ou une proportion d'environ 0,5 à 5% d'agent hydrophobant du type émulsifiant alimentaire classique tel que les esters d'acides gras, notamment l'ester de glycérol, et/ou par le fait
   - que l'on fait comprendre à la phase liquide, ajoutée au moment du malaxage à l'intérieur du pétrin, une proportion d'environ 5 à 30% par rapport à la masse totale du chewing-gum d'un hydrolysat d'amidon hydrogéné dont le spectre glucidique est le suivant, les pourcentages étant donnés par rapport à la matière sèche:
   - maltitol : de 25 à 95% et, de préférence, de 25 à 85%

EP 0 192 007 B1

- sorbitol : de 0,1 à 19% et, de préférence, de 1 à 17% le complément à 100 étant constitué par des polyols de degré de polymérisation ≧ 3.

## Claims

1. Sugarless speckled chewing-gum comprising, distributed in the mass, a plurality of colored sweetening particles, possibly flavored and possibly comprising an artificial sweetener, this chewing-gum being characterized by the fact that it comprises at least one of the confining agents of the group consisting of the food grade fatty acids such as stearates, particularly magnesium stearate, which are incorporated in the particles in a proportion of about 0.5 to 4% by weight with respect to the weight of the particles, of the food grade conventional emulsifiers such as the fatty acid esters, particularly glycerol ester which are incorporated in the particles in a proportion of about 0.5 to 5% by weight with respect to the weight of the particles, and of the hydrogenated starch hydrolysates whose glucidic spectrum is as follows, percentages being given with respect to the dry matter :
   - maltitol from 25 to 95%, preferably 25 to 85%,
   - sorbitol from 0.1 to 19%, preferably 1 to 17%, the complement to 100 being constituted by polyols of degree of polymerization ≧ 3, these hydrolysates being incorporated in the liquid phase of the chewing-gum in a proportion of about 5 to 30% by weight with respect to the total mass of the chewing-gum.

2. Speckled sugarless chewing-gum according to claim 1, characterized by the fact that the hydrogenated starch hydrolysate which is used has the following composition :

```
- maltitol        from 35 to 75%

- sorbitol        from  5 to 17%

- maltotriitol    from 10 to 25%,
```

   the complement to 100 being constituted by polyols of degree of polymerization or DP ≧ 4.

3. Speckled sugarless chewing-gum according to claim 1, characterized by the fact that the hydrogenate starch hydrolysate which is used has the following composition :

```
- hydrogenated disaccharides    from 50 to 55%

- sorbitol                      from  6 to  8%

- hydrogenated tri- to hexa-
  saccharides                   from 20 to 25%

- hydrogenated saccharides
  of DP > 6                     from 15 to 20%.
```

4. Process for the preparation of the chewing-gum according to claim 1, characterized by the fact:
   - that at the moment of the manufacture of the particles of colored sweetener, possibly flavored and comprising optionally an artificial sweetener, these particles are made to include a proportion of about 0.5 to 4% of a hydrophobant agent of the fatty acid salt type such as stearates, particularly magnesium stearate, or a proportion of about 0.5 to 5% of a hydrophobant agent of the conventional food grade emulsifier type such as fatty acids esters, particularly the glycerol ester, and/or by the fact
   - that the liquid phase, added at the moment of kneading within the kneading trough, is made to include a proportion of about 5 to 30% with respect to the total weight of the chewing-gum of a hydrogenated starch hydrolysate whose glucid spectrum is as follows, the percentages being given with respect to dry matter:
     - maltitol: from 25 to 95% and, preferably, from 25 to 85%,

8

- sorbitol: from 0.1 to 19% and, preferably, from 1 to 17%, the complement to 100 being constituted by polyols of degree of polymerization $\geq$ 3.

**Ansprüche**

1. Gesprenkelter, zuckerfreier Kaugummi, enthaltend in der Masse verteilt eine Vielzahl von Teilchen aus gefärbtem Süßungsmittel, gegebenenfalls aromatisiert und gegebenenfalls ein künstliches Süßungsmittel enthaltend, dadurch gekennzeichnet, daß er wenigstens eines der Einschlußmittel enthält aus der Gruppe, bestehend aus den Nahrungsmittelfettsäuren wie Stearaten und insbesondere Magnesiumstearat, die den Teilchen in einem Mengenverhältnis von etwa 0,5 bis 4 Gew.-% in Bezug auf das Gewicht dieser Teilchen einverleibt sind, aus den klassischen Nahrungsmittelemulgatoren wie Fettsäureestern und insbesondere Glycerinester, welche den Teilchen in einem Mengenverhältnis von etwa 0,5 bis 5 Gew.-% in Bezug auf das Gewicht dieser Teilchen einverleibt sind und aus den hydrierten Stärkehydrolysaten, deren Kohlenhydratspektrum dar folgende ist, wobei die Prozente in Bezug auf Trockensubstanz angegeben sind:
   - Maltit: von 25 bis 95 % und vorzugsweise von 25 bis 85 %,
   - Sorbit: von 0,1 bis 19 % und vorzugsweise von 1 bis 17 %, wobei die Ergänzung auf 100 aus Polyolen mit einem Polymerisationsgrad $\geq$ 3 besteht, und wobei diese Hydrolysate der flüssigen Phase des Kaugummis in einem Mengenanteil von etwa 5 bis 30 Gew.-% in Bezug auf die Gesamtmasse des Kaugummis einverleibt sind.

2. Gesprenkelter, zuckerfreier Kaugummi gemäß Anspruch 1, dadurch gekennzeichnet, daß das verwendete hydrierte Stärkehydrolysat die folgende Zusammensetzung aufweist:

   - Maltit          von 35 bis 75 %
   - Sorbit          von  5 bis 17 %
   - Maltotriit      von 10 bis 25 %,

   wobei die Ergänzung auf 100 aus Polyolen mit dem Polymerisationsgrad oder DP $\geq$ 4 besteht.

3. Zuckerfreier, gesprenkelter Kaugummi gemäß Anspruch 1, dadurch gekennzeichnet, daß das verwendete hydrierte Stärkehydrolysat die folgende Zusammensetzung aufweist:

   - hydrierte Disaccharide          von 50 bis 55 %
   - Sorbit                          von  6 bis  8 %
   - hydrierte Tri- bis Hexa-saccharide          von 20 bis 25 %
   - hydrierte Saccharide vom DP > 6          von 15 bis 20 %.

4. Verfahren zur Herstellung eines zuckerfreien, gesprenkelten Kaugummis gemäß Anspruch 1, dadurch gekennzeichnet,
   - daß man im Augenblick der Herstellung der Teilchen aus gefärbtem, gegebenenfalls aromatisiertem und gegebenenfalls ein künstliches Süßungsmittel enthaltendem Süßungsmittel, diesen Teilchen einen Mengenanteil von etwa 0,5 bis 4% eines hydrophobierenden Mittels vom Typ Fettsäuresalz, wie die Stearate, insbesondere Magnesiumstearat oder einen Mengenanteil von etwa 0,5 bis 5% eines hydrophobierenden Mittels vom Typ klassischer Lebensmittelemulgator wie die Fettsäureester, insbesondere Glycerinester, einverleibt und/oder
   - daß man der flüssigen Phase, die im Augenblick des Knetens im Innern der Knetmaschine zugesetzt wird, einen Mengenanteil von etwa 5 bis 30%, bezogen auf die Gesamtmasse des Kaugummis, eines hydrierten Stärkehydrolysats einverleibt, dessen Kohlenhydratspektrum das folgende ist, wobei die Prozente in Bezug auf die Trockensubstanz angegeben sind:
- Maltit: von 25 bis 95% und vorzugsweise von 25 bis 85%,
- Sorbit: von 0,1 bis 19% und vorzugsweise von 1 bis 17%, wobei die Ergänzung auf 100 aus Polyolen mit dem Polymerisationsgrad ≥ 3 besteht.